# EUROPÄISCHE PATENTSCHRIFT

(11) **EP 1 661 805 B1**
(45) Veröffentlichungstag und Bekanntmachung des Hinweises auf die Patenterteilung: **01.08.2007**
(21) Anmeldenummer: 05025126.3
(22) Anmeldetag: 17.11.2005
(51) Int. Cl.: B64C 3/26, B64C 3/48

(54) **Deckhaut für eine formvariable aerodynamische Fläche**
Surface skin for a shape-changing aerodynamic surface
Revêtement extérieur pour une surface aérodynamique à forme variable

(30) Priorität: 24.11.2004 DE 102004056649
(43) Veröffentlichungstag der Anmeldung: 31.05.2006
(73) Patentinhaber: Airbus Deutschland GmbH, 21129 Hamburg (DE)
(72) Erfinder: Dittrich, Kay W., 85635 Höhenkirchen (DE)
(74) Vertreter: Maiwald Patentanwalts GmbH

(56) Entgegenhaltungen:
- US-A- 2 973 170
- US-A- 6 145 791
- US-A1- 2005 151 015
- "SMART WINGS ELIMINATE MECHANICAL LINKAGES" DESIGN ENGINEERING, MORGAN-GRAMPIAN LTD. LONDON, GB, 1. Juli 1995 (1995-07-01), Seiten 43-44, XP000517526 ISSN: 0308-8448

## Beschreibung

Die Erfindung betrifft eine Deckhaut für eine formvariable aerodynamische Fläche, insbesondere für eine Flügel-, Leitwerks-, Steuerflächen- oder Klappenstruktur.

Zur Verbesserung der Aerodynamik von Flügeln, Leitwerken, Steuerflächen oder Klappen von Flugzeugen und anderen Fluggeräten werden zunehmend sogenannte formvariable Flügel eingesetzt. Ziel ist die Veränderung der'Profilwölbung ohne störende Unstetigkeiten wie etwa Klappenspalte oder Knicke in der Flügelkontur. Ein Beispiel für eine derartige formvariable Flügelstruktur ist in der DE 100 55 961 A1 "Mechanismus zur zumindest bereichsweisen Verstellung der Wölbung von Tragflügeln" beschrieben. Ein weiteres Beispiel ist das in USA realisierte Testprogramm "Advanced Fighter Technology Integration (AFTI)/F-11 Mission Adaptive Wing (MAW)". In diesem Testprogramm wurde eine Flugzeug mit einem formvariablen Flügel ausgerüstet und im Flug erprobt.

Ein gemeinsames Problem vieler derartiger formvariabler Flügelkonzepte ist es, eine Deckhaut für den formvariablen Flügel zu finden, die einerseits die aus der Formvariabilität resultierenden Verformungen mitmacht, und andererseits die auftretenden Luftlasten aufnehmen kann.

Im Rahmen des o.g. "Mission Adaptive Wing" Programms wurde dies so gelöst, dass die Oberseite des aerodynamischen Profils aus einer Schicht aus glasfaserverstärtem Kunststoff besteht, die elastisch gebogen wird, während die Unterseite aus mehreren überlappenden Blechen besteht, die sich bei einer Verformung des Flügels übereinander schieben können. Ein weiterer Weg wurde in dem Vortrag "Formveränderung von Flügelstrukturen mittels integrierter Shape Memory Alloy Aktuatoren" im Rahmen der DGLR Jahrestagung 1994 vorgestellt, wobei eine Faserverstärkung mit einem extrem anisotropen Lagenaufbau in einer elastischen Matrix vorgeschlagen wurde. Eine andere Realisierungsform wurde von Boeing vorgeschlagen. Deren "Flex Skin" Konzept besteht aus kurzen, geraden Streifen aus karbonfaserverstärktem Kunststoff, die isoliert voneinander nebeneinander in eine elastische Matrix eingebettet sind. Diese Hybridstruktur lässt sich biegen, ist aber auf Grund der Streifengeometrie in der Länge steif.

Die bislang vorgestellten Lösungswege für die Deckhäute sind nicht optimal für eine formvariable aerodynamische Fläche geeignet. Benötigt wird eine Deckhaut, die in der gewünschten Verformungsrichtung flexibel und/oder elastisch und in den Richtungen quer dazu steif ist. Zudem wird eine definierte Steifigkeit gegenüber einer Biegeverformung gefordert.

Die Aufgabe der Erfindung ist es eine verbesserte Deckhaut für eine formvariable aerodynamische Fläche zu schaffen.

Diese Aufgabe wird durch eine formvariable aerodynamische Fläche mit den Merkmalen des Anspruchs 1 gelöst.

Vorteilhafte Ausführungsformen und Weiterbildungen der erfindungsgemäßen formvariablen aerodynamischen Fläche sind in den Unteransprüchen gekennzeichnet.

Durch die Erfindung wird eine Deckhaut für ein formvariable aerodynamische Fläche, insbesondere für eine Flügel-, Leitwerks-, Steuerflächen- oder Klappenstruktur geschaffen. Erfindungsgemäß ist es vorgesehen, dass die Deckhaut eine verformbare Fachwerkstruktur enthält, welche in eine Schicht aus einem elastischen Material, insbesondere aus einem Gummi oder Polymer eingebettet ist.

Gemäß einer Ausführungsform der erfindungsgemäßen Deckhaut besteht das Fachwerk aus Elementen, die an jeweiligen Gelenken beweglich miteinander verbunden sind.

Die Elemente des Fachwerks können mittels der elastischen Schicht gelenkig miteinander verbunden sein.

Das Fachwerk einschließlich der Elemente und der Gelenke kann zumindest bereichsweise einstückig aus einem elastischen oder flexiblen Material hergestellt sein.

Das einstückige Fachwerk kann aus einem Kunststoff oder einem Metall gegossen sein.

Alternativ kann das einstückige Fachwerk aus einem faserverstärkten Kunststoff hergestellt sein.

Gemäß einer weiteren Alternative kann das einstückige Fachwerk aus einer vorgefertigten Platte ausgeschnitten sein.

Die vorgefertigte Platte, aus der das einstückige Fachwerk ausgeschnitten ist, kann aus Metall, Kunststoff oder einem faserverstärkten Kunststoff hergestellt sein.

Gemäß einer vorteilhaften Ausführungsform der Erfindung enthält das einstückige Fachwerk die Elemente bildende Bereiche und die Gelenke bildende Bereiche, wobei die die Elemente bildenden Bereiche eine kleinere Flexibilität oder Elastizität aufweisen als die die Gelenke bildenden Bereiche.

Gemäß einer anderen vorteilhaften Ausführungsform der Erfindung sind die Elemente des Fachwerks in sich elastisch.

Die die Gelenke bildenden Bereiche können einen kleineren Querschnitt aufweisen als die die Elemente bildenden Bereiche.

Gemäß einer Ausführungsform der Erfindung ist es vorgesehen, dass die die Elemente bildenden Bereiche aus einem faserverstärkten Kunststoff hergestellt sind und dass die die Gelenke bildenden Bereiche aus einem Kunststoff ohne Faserverstärkung oder mit einer im Sinne einer höheren Flexibilität oder Elastizität vorgesehenen schwächeren Faserverstärkung hergestellt sind.

Gemäß einer alternativen Ausführungsform der Erfindung ist es vorgesehen, dass die Fachwerkstruktur auf einem elastischen Trägervlies befestigt ist.

Dabei kann die Fachwerkstruktur auf dem elastischen Trägervlies aufgenäht oder aufgenietet sein.

Gemäß einer vorteilhaften Weiterbildung der Erfindung ist es vorgesehen, dass die elastische Schicht eine elastisch angeordnete Faserverstärkung, insbesondere aus Kurzfasern oder aus Vlies enthält.

Gemäß einer anderen Ausführungsform der Erfindung können die Elemente einen in einer Querrichtung gestreckten Querschnitt aufweisen und hochkant in die elastische Schicht eingebettet sein.

Vorteilhafterweise ist es vorgesehen, dass die Deckhaut in einer ersten Richtung flexibel und/oder elastisch und in einer zweiten, dazu quer verlaufenden Richtung im wesentlichen starr ist.

Gemäß einer vorteilhaften Ausführungsform der Erfindung ist es vorgesehen, dass die Fachwerkstruktur durch die Elemente gebildete auxetische Elementarzellen enthält.

Hierbei kann es insbesondere vorgesehen sein, dass die Fachwerkstruktur durch die Elemente gebildete auxetische Elementarzellen und konventionelle Elementarzellen enthält und ein vorgegebenes Querkontraktionsverhältnis aufweist.

Gemäß einer besonderen Ausführungsform der Erfindung ist das Querkontraktionsverhältnis im wesentlichen null.

Gemäß einer vorteilhaften Ausführungsform der erfindungsgemäßen Deckhaut sind an zwei bezüglich einer Richtung, in der die Deckhaut flexibel und/oder elastisch ist, einander gegenüberliegenden Seiten langgestreckte, zur Befestigung dienende Trägerelemente vorgesehen.

Vorteilhafterweise sind die Trägerelemente in die elastische Schicht eingebettet.

Die Trägerelemente können plattenförmig sein.

Gemäß einer bevorzugten Ausführungsform der Erfindung ist die Deckhaut unter Vorspannung montiert, um ein Beulen bei Kontraktion zu verhindern.

Gemäß einer Weiterbildung der erfindungsgemäßen Deckhaut ist es vorgesehen, dass dem die elastische Schicht bildenden Material zusätzliche Funktionsstoffe, insbesondere Ruß, Metallpulver oder leitfähige Vliesfasern beigemischt sind.

Gemäß einer anderen vorteilhaften Weiterbildung der erfindungsgemäßen Deckhaut ist in diese ein Metallgewebe oder Metallvlies eingebettet.

Die Deckhaut kann mit einer elastischen Lackierung versehen sein.

Vorzugsweise ist die Deckhaut in einem Bereich von mindestens -55°C bis mindestens +120°C, vorzugsweise bis mindestens +180°C temperaturbeständig.

Im folgenden wird ein Ausführungsbeispiel der Erfindung anhand der Zeichnung erläutert.

Es zeigt:
Figur 1 eine Querschnittsansicht durch eine aerodynamische Fläche mit einem formvariablen Bereich in Form einer Flügel-, Leitwerks-, Steuerflächen- oder Klappenstruktur;
Figuren 2 bis 4 vergrößerte Querschnittsansichten des formvariablen Bereichs der in Figur 1 gezeigten aerodynamischen Fläche;
Figuren 5 und 6 nochmals vergrößerte Querschnittsansichten, welche einen Ausschnitt der Deckhaut im formvariablen Bereich der Figuren 2 bis 4 zeigen;
Figur 7a) eine weitere vergrößerte Schnittansicht durch die Deckhaut der formvariablen aerodynamischen Fläche, welche den inneren Aufbau der Deckhaut zeigt;
Figur 7b) eine geschnittene Draufsicht auf die formvariable aerodynamische Fläche von Figur 7a) entlang der Linie A-B in einem kleineren Maßstab; und
Figur 8a) bis c) schematisierte Darstellungen entsprechend der Draufsicht von Figur 7b), welche verschiedene Zustände der Deckhaut zeigen, nämlich einen kontrahierten Zustand (Figur 8a)), einen neutralen Zustand (Figur 8b)) bzw. einen expandierten Zustand (Figur 8c)).

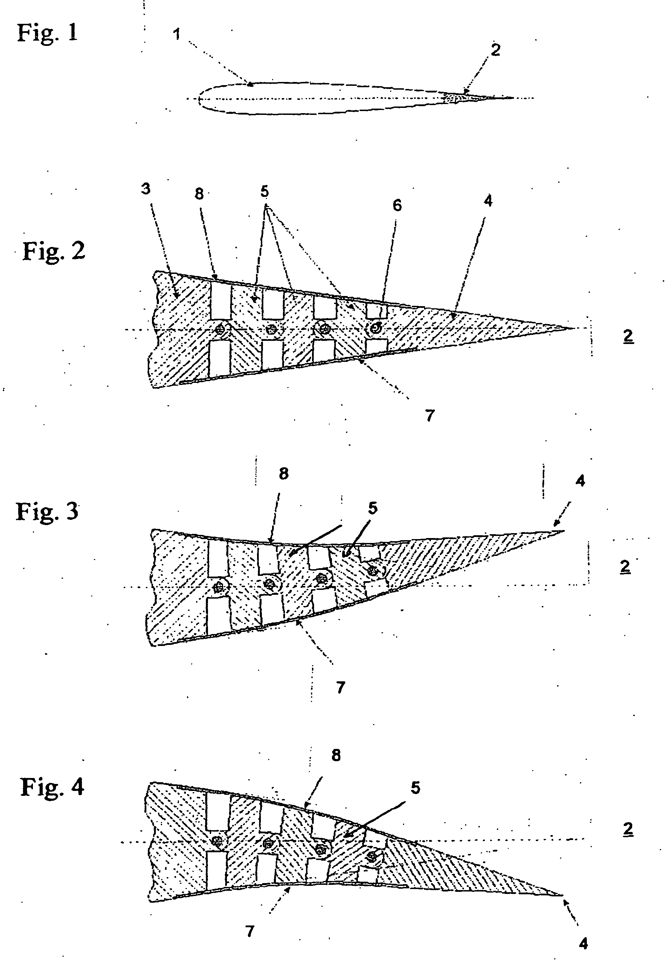

In Figur 1 ist ein Flügelquerschnitt 1 gezeigt, an dessen hinterem Ende eine formvariable Fläche 2 vorgesehen ist. Hierbei kann es sich um eine Flügel-, Leitwerks-, Steuerflächen- oder Klappenstruktur handeln.

Die formvariable Fläche 2 kann verschiedene Stellungen einnehmen, von denen in Figur 2 bis 4 drei verschiedene dargestellt sind. Figur 2 zeigt die formvariable Fläche 2 in einer Neutralstellung oder Mittelstellung. Die Figuren 3 und 4 zeigen die formvariable Fläche 2 in zwei ausgelenkten Stellungen, nämlich in Figur 3 nach oben angestellt und in Figur 4 nach unten angestellt. In den beiden in Figur 3 und 4 gezeigten Fällen entfaltet die formvariable Fläche 2 eine aerodynamische Wirkung in zwei entgegen gesetzten Richtungen gegenüber der in Figur 2 gezeigten Position, wie es bei einer Steuerfläche oder einer Klappe der Fall ist.

Im einzelnen enthält die formvariable Fläche 2 an seinem vorderen Ende einen starren Flügelkasten 3, welcher die Verbindung mit dem nicht variablen Teil des Flügelquerschnitts 1 herstellt, und eine starre Endkante 4, welche das hintere Ende der formvariablen Fläche 2 und damit auch des Flügelquerschnitts bildet. Der dazwischen befindliche Teil der Fläche 2 ist formvariabel.

Die innere Mechanik der formvariablen Fläche 2 ist in Hinblick auf die vorliegende Erfindung nicht wesentlich, bei dem dargestellten Ausführungsbeispiel wird angenommen, dass eine Reihe von sich in Spannweitenrichtung erstreckenden Profilen 5 vorgesehen sind, welche durch Scharnierelemente 6 drehbar gelenkig miteinander verbunden sind.

Die zwischen den Profilen 5 gebildeten Lücken sind durch eine untere flexible und elastische Deckhaut 7 und eine obere flexible und elastische Deckhaut 8 überspannt. Diese Deckhäute 7, 8 bilden die aerodynamische Oberfläche des Flügels 1 im Bereich der formvariablen Fläche 2. Die flexiblen und elastischen Deckhäute 7, 8 sind einerseits an dem starren Flügelkasten 3 und andererseits an der starren Endkante 4 befestigt. Dazwischen sind die Deckhäute 7, 8 auf den Profilen 5 abgestützt. Wird nun die formvariable Fläche 2 nach oben ausgelenkt, wie in Figur 3 gezeigt, so dehnt sich die untere Deckhaut 7, während die obere Deckhaut 8 gestaucht wird. Wird die formvariable Fläche 2 nach unten ausgelenkt, wie in Figur 4 gezeigt, wird umgekehrt die untere Deckhaut 7, gestaucht, die obere Deckhaut 8 dagegen gedehnt.

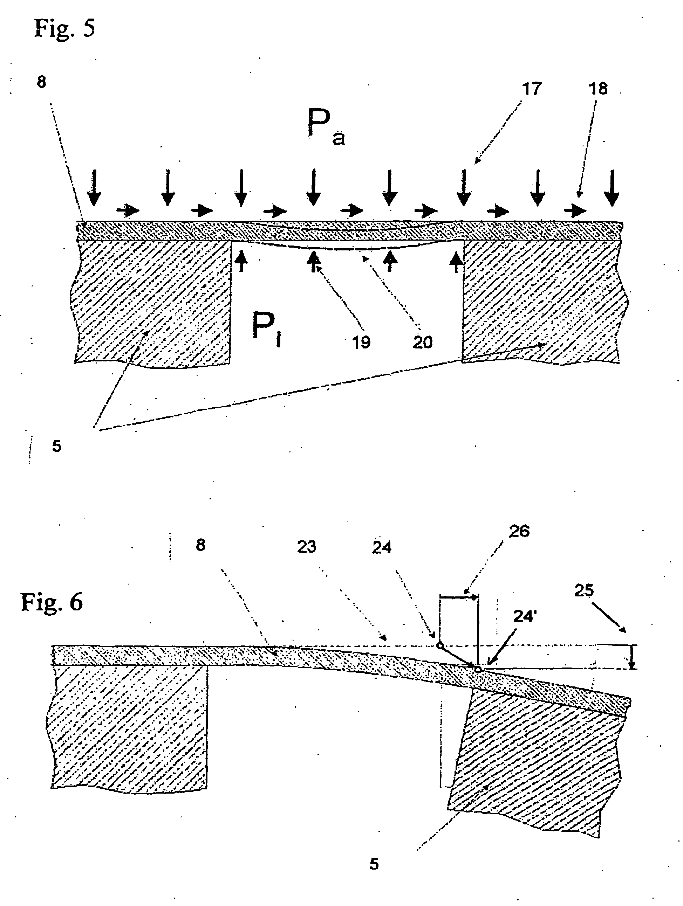

Die äußeren Deckhäute 7, 8 sind aerodynamischen Lasten ausgesetzt, welche für den Fall der oberen Deckhaut 8 in Figur 5 dargestellt sind. Die Deckhaut 8 ist von außen mit einem aerodynamischen Druck Pa und von innen mit einem Druck Pi belastet, was zu einer äußeren Flächenlast 17 und einer inneren Flächenlast 19 an der Deckhaut 8 führt. Die Differenz der Drücke Pa und Pi führt zu einer resultierenden Kraft, welche das Bestreben hat, die Deckhaut 8 in der einen oder der anderen Richtung, d.h. nach innen oder nach außen zu beulen, wobei in Figur 5 der Fall gezeigt ist, dass der äußere Druck Pa den inneren Druck Pi übertrifft und damit eine resultierende Kraft erzeugt wird, welche das Bestreben hat die Deckhaut 8 nach innen zu beulen, wie dargestellt. Zudem tritt aufgrund von durch die Umströmung hervorgerufenen Reibungskräften eine Schubbelastung 18 an der äußeren Oberfläche der Deckhaut 8 auf. Die aufgrund des Differenzdrucks an der Deckhaut 8 auftretende Verformung soll aus aerodynamischen Gründen für den betreffenden Anwendungsfall ein vorgegebenes zulässiges Maß nicht überschreiten.

Durch den Differenzdrucks kommt es zu einer Verformung der Deckhaut 8, die aus aerodynamischen Gründen für einen konkreten Anwendungsfall ein vorgegebenes zulässiges Maß nicht überschreiten soll. Gleichzeitig muss die Deckhaut 8 eine Bewegung der Profile 5 um ihre Gelenke 6 mitmachen, oder allgemein gesprochen, in der Lage sein eine Längenänderung aufgrund der Formveränderung der formvariablen Fläche 2 in Form einer Verlängerung bzw. einer Verkürzung auszugleichen.

Wie in Figur 6 gezeigt ist, stellt sich durch die Formveränderung der formvariablen Fläche 2 eine gegenüber der Ausgangslage 23 verformte Geometrie der Deckhaut 8 ein. Ein Punkt 24 der in der Ausgangslage 23 befindlichen, nicht verformten Deckhaut 8 geht unter Verlagerung um die Strecke 26 in Richtung längs zur Deckhaut 8 und um die Strecke 25 in Richtung senkrecht zur Deckhaut 8 in einen Punkt 24' über. Damit der Punkt 24 in den Punkt 24' übergehen kann, muss die Deckhaut 8 sowohl im Sinne einer Biegung flexibel sein als auch im Sinne einer Dehnung elastisch.

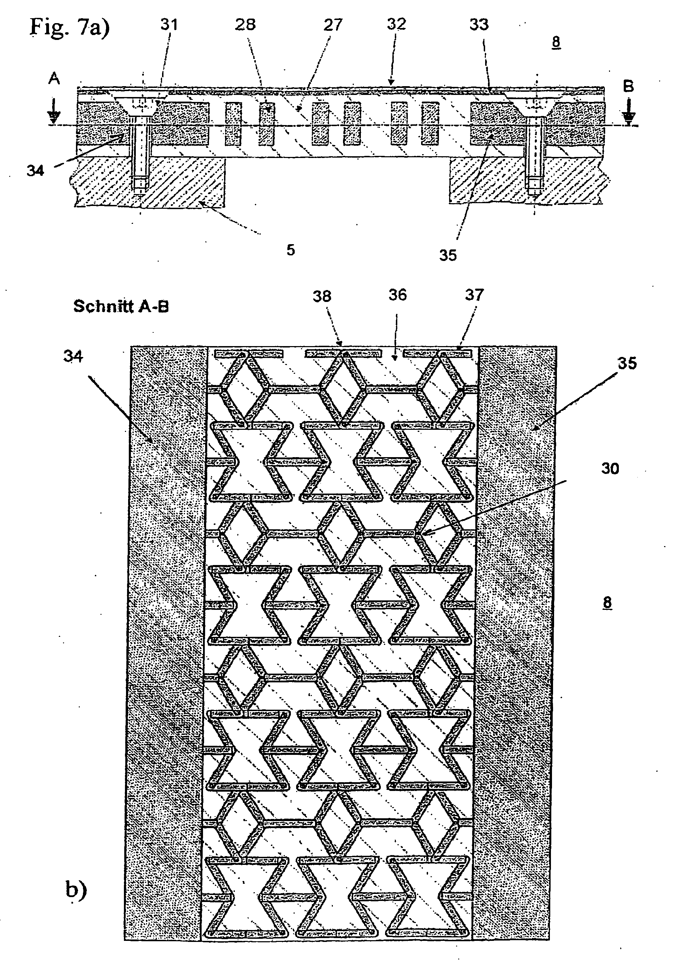

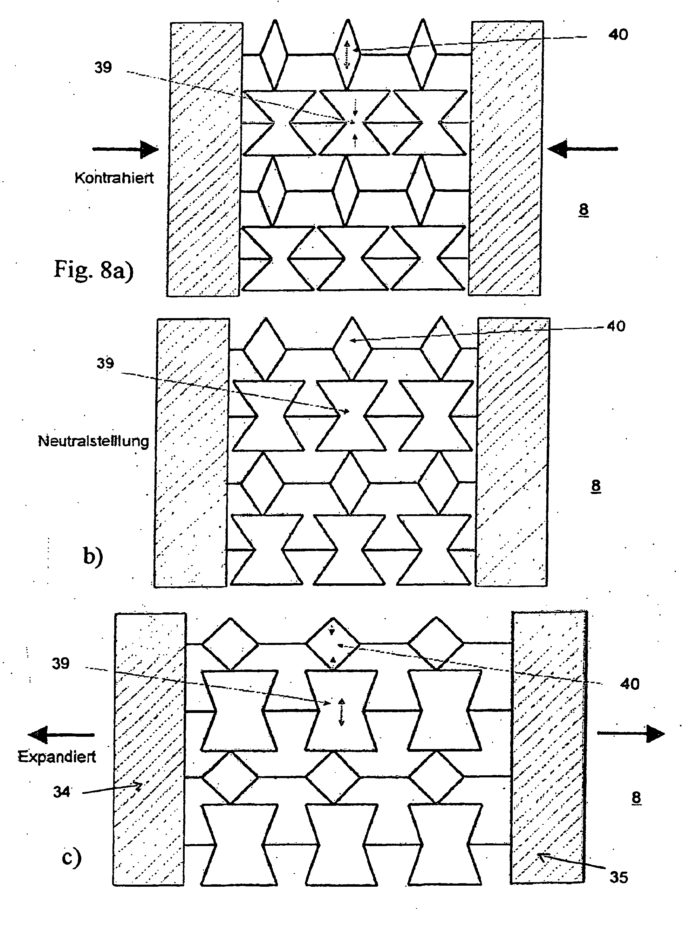

Bezugnehmend auf die Figuren 7 und 8 soll nun ein Ausführungsbeispiel einer insgesamt mit dem Bezugszeichen 8 bezeichnenden Deckhaut beschrieben werden, welches selbstverständlich nicht auf den Fall der in den Figuren 2 bis 6 dargestellten oberen Deckhaut 8 beschränkt ist.

Allgemein enthält die Deckhaut 8 eine verformbare Fachwerkstruktur 28, welche in eine Schicht 27 aus einem elastischen Material eingebettet ist. Dieses elastische Material, welches für die oben beschriebene Elastizität und Flexibilität bei der Verformung der formvariablen aerodynamischen Fläche 2 dient, kann insbesondere ein Gummimaterial oder ein Polymermaterial sein.

Bei dem in den Figuren 7 und 8 dargestellten Ausführungsbeispiel besteht das Fachwerk 28 aus einzelnen Elementen 29, die an jeweiligen Gelenken 30 beweglich miteinander verbunden sind. Die einzelnen Elemente 29 haben, wie Figur 7a) zeigt, einen gestreckten Querschnitt und sind hochkant in der elastischen Schicht 27 eingebettet. An den zwei bezüglich der Richtung, in der die Deckhaut 8 flexibel und/oder elastisch ist, einander gegenüberliegenden Seiten sind langgestreckte Trägerelemente 34, 35 vorgesehen, welche der Befestigung der Deckhaut 8 an der Unterstruktur dienen, etwa an dem starren Flügelkasten 3 und der starren Endkante 4 oder auch an den Profilen 5. Die Befestigung kann mittels Schrauben 31 erfolgen, wie in Figur 7a) im Querschnitt gezeigt. Die Trägerelemente 34, 35 sind plattenförmig und in die elastische Schicht 27 eingebettet, wie ebenfalls aus Figur 7a) ersichtlich ist.

Die Deckhaut 8 ist in einer ersten Richtung, die in den Figuren 8a) und 8c) durch die Pfeile dargestellt ist, flexibel und/oder elastisch und in einer zweiten, dazu quer verlaufenden Richtung, die parallel zu den Trägerelementen 34, 35 ist, im wesentlichen starr. Um dies zu erreichen, ist bei dem in den Figuren 7 und 8 dargestellten Ausführungsbeispiel die Fachwerkstruktur 28 aus zwei Arten von Elementarzellen 39, 40 aufgebaut, die so ausgebildet sind, dass sich ein Querkontaktionsverhältnis von im wesentlichen null ergibt. Das heißt, die Deckhaut 8 erfährt in Richtung parallel zu den Trägerelementen 34, 35 im wesentlichen keine Längenänderung, wenn in Richtung der in Figur 8a) bzw. 8c) gezeigten Pfeile eine Kontraktion bzw. Expansion stattfindet. Dies wird erreicht durch eine Kombination von sogenannten auxetischen Elementarzellen 39 und konventionellen Elementarzellen 40 in dem Fachwerk 28.

Die auxetischen Elementarzellen 39 sind Elemente mit einer negativen Querkontraktion, während die konventionellen Elementarzellen 40 Elemente mit positiver Querkontraktion sind, wobei sich die jeweiligen Effekte ausgleichen. Die Geometrie der auxetischen Elementarzellen 39 ist so gewählt, dass eine Expansion in der gewünschten Bewegungsrichtung auch zu einer Expansion in der Querrichtung führt. Eine Kontraktion in der gewünschten Bewegungsrichtung führt ebenfalls zu einer Kontraktion in der Querrichtung. Neben jeder auxetischen Elementarzelle 39 ist eine konventionelle Elementarzelle 40 angeordnet. Diese kontrahiert in Querrichtung bei Expansion in der gewünschten Bewegungsrichtung. Umgekehrt expandiert die konventionelle Elementarzelle 40 bei einer Kontraktion in der gewünschten Bewegungsrichtung. Die Querverformungen der auxetischen Elementarzellen 39 und der konventionellen Elementarzellen 40 gleichen sich also jeweils aus, so dass im Effekt die resultierende Querverformung des Fachwerks bei Kontraktion oder Expansion in Bewegungsrichtung verschwindet.

Zur Vermeidung von Beulen beim Kontrahieren ist die Deckhaut 8 unter Zugvorspannung montiert. Alternativ kann eine entsprechend hohe Biegesteifigkeit des Fachwerks 28 vorgesehen sein.

Alternativ zu dem dargestellten Ausführungsbeispiel, bei dem die Elemente 29 des Fachwerks 28 gegenseitig mittels Gelenken 30 verbunden sind, können die Elemente 29 auch indirekt mittels der elastischen Schicht 27 gelenkig miteinander verbunden sein.

Gemäß noch einer anderen Alternative kann das Fachwerk 28 einschließlich der Elemente 29 und der Gelenke 30 zumindest bereichsweise einstückig aus einem elastischen oder flexiblen Material hergestellt sein. Das bedeutet, dass das einstückige Fachwerk 28 die Elemente 29 bildende Bereiche und weiterhin die Gelenke 30 bildende Bereiche enthält, wobei die die Elemente 29 bildenden Bereiche eine kleinere Flexibilität oder Elastizität aufweisen können als die die Gelenke 30 bildende Bereiche. Alternativ können auch die Elemente 29 des Fachwerks 28 in sich elastisch sein.

Die die Gelenke 30 bildenden Bereiche des einstückigen Fachwerks können einen kleineren Querschnitt aufweisen als die die Elemente 29 bildenden Bereiche, oder die die Elemente 29 bildenden Bereiche können aus einem faserverstärkten Kunststoff hergestellt sein und die die Gelenke 30 bildenden Bereiche können aus einem Kunststoff ohne Faserverstärkung oder mit einer Faserverstärkung hergestellt sein, die im Sinne einer höheren Flexibilität oder Elastizität entsprechend schwächer ist.

Die Fachwerkstruktur 28 kann auch auf einem elastischen Trägervlies befestigt sein, wobei sie durch Aufnähen oder Aufnieten mit dem Trägervlies verbunden sein kann.

Das einstückige Fachwerk 28 kann aus einem Kunststoff oder einem Metall gegossen sein oder aus einem faserverstärktem Kunststoff hergestellt sein. Insbesondere kann das einstückige Fachwerk 28, etwa durch Laser- oder Wasserstrahlschneiden, aus einer vorgefertigten Platte ausgeschnitten sein. Diese vorgefertigte Platte kann aus Metall, Kunststoff oder einem faserverstärktem Kunststoff bestehen.

Die elastische Schicht 27, in welche die Fachwerkstruktur 28 und gegebenenfalls die Trägerelemente 34, 35 eingebettet sind, kann eine elastisch ausgebildete Faserverstärkung enthalten, die beispielsweise aus Kurzfasern oder aus Vlies bestehen kann.

Weiterhin kann das die elastische Schicht 27 bildende Material zusätzliche Funktionsstoffe enthalten, welche zum Erfüllen von zusätzlichen Funktionen dienen, wie etwa der Absorption von Radarstrahlung und dabei insbesondere der Dämpfung von elektromagnetischen Oberflächenwellen. Solche zusätzliche Funktionsstoffe können insbesondere Ruß, Metallpulver oder leitfähige Kurzfasern sein.

Weiterhin kann auf der Deckhaut 8 ein Metallgewebe oder ein Metallfließ 33 vorgesehen oder in diese eingebettet sein, was insbesondere als Blitzschutz dienen kann.

Auf der Oberfläche der Deckhaut 8 kann weiterhin eine elastische Lackierung 32 vorgesehen sein, wie sie als oberste Schicht in Figur 7a) dargestellt ist.

Die Deckhaut 8 ist so ausgebildet, dass sie allen beim Flugbetrieb auftretenden Temperaturen beständig ist, also in einem Temperaturbereich von mindestens -55°C bis mindestens +120°C, vorzugsweise bis mindestens +180°C oder in einem noch weiteren Bereich.

Durch die Erfindung wird somit eine Deckhaut für eine formvariable aerodynamische Fläche geschaffen, welche aerodynamisch glatt und dicht ist, ein geringes Gewicht aufweist und eine definierte Flexibilität und/oder Elastizität in einer gewünschten Bewegungsrichtung bei gleichzeitig definierter Steifigkeit in anderen Raumrichtungen aufweist.

### Bezugszeichenliste

- 1: Flügelquerschnitt
- 2: Formvariable Fläche
- 3: starrer Flügelkasten
- 4: starre Hinterkante
- 5: Profil
- 6: Gelenk
- 7: untere elastische Deckhaut
- 8: obere elastische Deckhaut
- 17: Außendruck
- 18: Schubbelastung
- 19: Innendruck
- 20: Biegelinie der oberen elastischen Deckhaut
- 23: unverformte Geometrie der oberen elastischen Deckhaut
- 24, 24': Punkt auf der Oberfläche der Deckhaut
- 25: vertikale Verformung des Punktes 24
- 27: elastische Gummi- oder Polymerschicht
- 28: Fachwerkstruktur
- 29: Elemente
- 30: Gelenke
- 31: Befestigungsschraube
- 32: elastische Lackierung
- 33: Metallgewebe bzw. Metallvlies
- 34, 35: Trägerplattenelement der Fachwerkstruktur
- 38: Kontaktstelle zwischen den Elementen des Fachwerks
- 39: auxetische Elementarzelle des Fachwerks
- 40: konventionelle Elementarzelle des Fachwerks
- 50: Unterstruktur

## Patentansprüche

1. Deckhaut für eine formvariable aerodynamische Fläche, insbesondere für eine Flügel-, Leitwerks-, Steuerflächen- oder Klappenstruktur, **dadurch gekennzeichnet, dass** die Deckhaut (7, 8) eine verformbare Fachwerkstruktur (28) enthält, welche in eine Schicht (27) aus einem elastischen Material, insbesondere aus einem Gummi oder Polymer eingebettet ist.

2. Deckhaut nach Anspruch 1, **dadurch gekennzeichnet, dass** das Fachwerk (28) aus Elementen (29) besteht, die an jeweiligen Gelenken (30) beweglich miteinander verbunden sind.

3. Deckhaut nach Anspruch 1 oder 2, **dadurch gekennzeichnet, dass** die Elemente (29) des Fachwerks (28) mittels der elastischen Schicht (27) gelenkig miteinander verbunden sind.

4. Deckhaut nach Anspruch 1 oder 2, **dadurch gekennzeichnet, dass** das Fachwerk (28) einschließlich der Elemente (29) und der Gelenke (30) zumindest bereichsweise einstückig aus einem elastischen oder flexiblen Material hergestellt ist.

5. Deckhaut nach Anspruch 4, **dadurch gekennzeichnet, dass** das einstückige Fachwerk (28) aus einem Kunststoff oder einem Metall gegossen ist.

6. Deckhaut nach Anspruch 4, **dadurch gekennzeichnet, dass** das einstückige Fachwerk (28) aus einem faserverstärkten Kunststoff hergestellt ist.

7. Deckhaut nach Anspruch 4, **dadurch gekennzeichnet, dass** das einstückige Fachwerk (28) aus einer vorgefertigten Platte ausgeschnitten ist.

8. Deckhaut nach Anspruch 7, **dadurch gekennzeichnet, dass** die vorgefertigte Platte, aus der das einstückige Fachwerk (28) ausgeschnitten ist, aus Metall, Kunststoff oder einem faserverstärkten Kunststoff hergestellt ist.

9. Deckhaut nach einem der Ansprüche 4 bis 8, **dadurch gekennzeichnet, dass** das einstückige Fachwerk (28) die Elemente (29) bildende Bereiche und die Gelenke (30) bildende Bereiche enthält, wobei die die Elemente (29) bildenden Bereiche eine kleinere Flexibilität oder Elastizität aufweisen als die die Gelenke (30) bildenden Bereiche.

10. Deckhaut nach einem der Ansprüche 4 bis 8, **dadurch gekennzeichnet, dass** die Elemente (29) des Fachwerks (28) in sich elastisch sind.

11. Deckhaut nach Anspruch 9, **dadurch gekennzeichnet, dass** die die Gelenke (30) bildenden Bereiche einen kleineren Querschnitt aufweisen als die die Elemente (29) bildenden Bereiche.

12. Deckhaut nach Anspruch 9 oder 11, **dadurch gekennzeichnet, dass** die die Elemente (29) bildenden Bereiche aus einem faserverstärkten Kunststoff hergestellt sind und dass die die Gelenke (30) bildenden Bereiche aus einem Kunststoff ohne Faserverstärkung oder mit einer im Sinne einer höheren Flexibilität oder Elastizität vorgesehenen schwächeren Faserverstärkung hergestellt sind.

13. Deckhaut nach einem der Ansprüche 2 bis 12, **dadurch gekennzeichnet, dass** die Fachwerkstruktur (28) auf einem elastischen Trägervlies befestigt ist.

14. Deckhaut nach Anspruch 13, **dadurch gekennzeichnet, dass** die Fachwerkstruktur (28) auf dem elastischen Trägervlies aufgenäht oder aufgenietet ist.

15. Deckhaut nach einem der Ansprüche 1 bis 14, **dadurch gekennzeichnet, dass** die elastische Schicht (27) eine elastisch angeordnete Faserverstärkung, insbesondere aus Kurzfasern oder aus Vlies enthält.

16. Deckhaut nach einem der Ansprüche 2 bis 15, **dadurch gekennzeichnet, dass** die Elemente (29) einen in einer Querrichtung gestreckten Querschnitt aufweisen und hochkant in die elastische Schicht (27) eingebettet sind.

17. Deckhaut nach einem der Ansprüche 1 bis 16, **dadurch gekennzeichnet, dass** die Deckhaut in einer ersten Richtung flexibel und/oder elastisch und in einer zweiten, dazu quer verlaufenden Richtung im wesentlichen starr ist.

18. Deckhaut nach einem der Ansprüche 1 bis 17, **dadurch gekennzeichnet, dass** die Fachwerkstruktur (28) durch die Elemente (29) gebildete auxetische Elementarzellen (39) enthält.

19. Deckhaut nach Anspruch 18, **dadurch gekennzeichnet, dass** die Fachwerkstruktur (28) durch die Elemente (29) gebildete auxetische Elementarzellen (39) und konventionelle Elementarzellen (40) enthält und ein vorgegebenes Querkontraktionsverhältnis aufweist.

20. Deckhaut nach Anspruch 19, **dadurch gekennzeichnet, dass** das Querkontraktionsverhältnis im wesentlichen null ist.

21. Deckhaut nach einem der Ansprüche 2 bis 20, **dadurch gekennzeichnet, dass** an zwei bezüglich einer Richtung, in der die Deckhaut flexibel und/oder elastisch ist, einander gegenüberliegenden Seiten langgestreckte, zur Befestigung dienende Trägerelemente (34, 35) vorgesehen sind.

22. Deckhaut nach Anspruch 21, **dadurch gekennzeichnet, dass** die Trägerelemente (34, 35) in die elastische Schicht (27) eingebettet sind.

23. Deckhaut nach Anspruch 21, oder 22, **dadurch gekennzeichnet, dass** die Trägerelemente (34, 35) plattenförmig sind.

24. Deckhaut nach einem der Ansprüche 1 bis 23, **dadurch gekennzeichnet, dass** die Deckhaut unter Zugvorspannung montiert ist, um ein Beulen bei Kontraktion zu verhindern.

25. Deckhaut nach einem der Ansprüche 1 bis 24, **dadurch gekennzeichnet, dass** dem die elastische Schicht (27) bildenden Material zusätzliche Funktionsstoffe, insbesondere Ruß, Metallpulver oder leitfähige Kunstfasern beigemischt sind.

26. Deckhaut nach einem der Ansprüche 1 bis 25, **dadurch gekennzeichnet, dass** in die Deckhaut (7, 8) ein Metallgewebe oder Metallvlies (33) eingebettet ist.

27. Deckhaut nach einem der Ansprüche 1 bis 26, **dadurch gekennzeichnet, dass** die Deckhaut (7, 8) mit einer elastischen Lackierung (32) versehen ist.

28. Deckhaut nach einem der Ansprüche 1 bis 27, **dadurch gekennzeichnet, dass** die Deckhaut (7, 8) in einem Bereich von mindestens -55°C bis mindestens +120°C, vorzugsweise bis mindestens +180°C temperaturbeständig ist.

## Claims

1. A cover skin for a variable-shape aerodynamic area, in particular for a wing structure, a tail unit structure, a control surface structure, or a flap structure, wherein the cover skin (7, 8) comprises a deformable framework structure (28) that is embedded in a layer (27) made of an elastic material, in particular made of rubber or polymer.

2. The cover skin of claim 1, wherein the framework construction (28) comprises elements (29) which are movably interconnected by respective joints.

3. The cover skin of claim 1 or 2, wherein the elements (29) of the framework construction (28) are pin-jointed so as to be articulated by means of the elastic layer (27).

4. The cover skin of claim 1 or 2, wherein the framework construction (28), including the elements (29) and the joints (30), is at least in some regions made in a single piece from an elastic or flexible material.

5. The cover skin of claim 4, wherein the single-piece framework construction (28) is cast from a plastic material or a metal.

6. The cover skin of claim 4, wherein the single-piece framework construction (28) is made from a fibre reinforced plastic.

7. The cover skin of claim 4, wherein the single-piece framework construction (28) is cut from a prefabricated plate.

8. The cover skin of claim 7, wherein the prefabricated plate from which the single-piece framework construction (28) is cut is made of a metal, a plastic, and a fibre reinforced plastic. KK:AD:IB:bb

9. The cover skin of any one of claims 4 to 8, wherein the single-piece framework construction (28) comprises the regions that form the elements (29) and the regions that form the joints (30), wherein the regions that form the elements (29) are less flexible or elastic than the regions that form the joints (30).

10. The cover skin of any one of claims 4 to 8, wherein the elements (29) of the framework construction (28) are intrinsically elastic.

11. The cover skin of claim 9, wherein the cross section of the regions that form the joints (30) is smaller than the cross section of the regions that form the elements (29).

12. The cover skin of any one of claims 9 or 11, wherein the regions that form the elements (29) are made from a fibre reinforced plastic, and the regions that form the joints (30) are made from a plastic without fibre reinforcement or with a fibre reinforcement that is weaker so as to provide better flexibility or elasticity.

13. The cover skin of any one of claims 2 to 12, wherein the framework structure (28) is attached to an elastic carrier fleece.

14. The cover skin of claim 13, wherein the framework structure (28) is sewn onto or riveted onto the elastic carrier fleece.

15. The cover skin of any one of claims 1 to 14, wherein the elastic layer (27) comprises an elastically arranged fibre reinforcement, in particular made from milled fibres or from a fleece.

16. The cover skin of any one of claims 2 to 15, wherein the elements (29) are of elongated cross section in a transverse direction and are embedded on edge in the elastic layer (27).

17. The cover skin of any one of claims 1 to 16, wherein in a first direction the cover skin is flexible and/or elastic, and in a second direction, which extends transversely to the first direction, is essentially rigid.

18. The cover skin of any one of claims 1 to 17, wherein the framework structure (28) comprises auxetic elementary cells (39) that are formed by the elements (29).

19. The cover skin of claim 18, wherein the framework structure (28) comprises auxetic elementary cells (39) that are formed by the elements (29), and conventional elementary cells (40), and has a predefined transversal contraction ratio.

20. The cover skin of claim 19, wherein the transversal contraction ratio is essentially zero.

21. The cover skin of any one of claims 2 to 20, wherein on two opposite sides in relation to a direction in which the cover skin is flexible and/or elastic, elongated carrier elements (34, 35) that are used for attachment are provided.

22. The cover skin of claim 21, wherein the carrier elements (34, 35) are embedded in the elastic layer (27).

23. The cover skin of claim 21 or 22, wherein the carrier elements (34, 35) are plate-shaped.

24. The cover skin of any one of claims 1 to 23, wherein the cover skin is installed with initial tensile stress so as to prevent bulging during contraction.

25. The cover skin of any one of claims 1 to 24, wherein additional functional materials, in particular soot, metal powder, or conductive synthetic fibres, are admixed to the material that forms the elastic layer (27).

26. The cover skin of any one of claims 1 to 25, wherein a metallic woven fabric or a metallic nonwoven fabric (33) is embedded in the cover skin (7, 8).

27. The cover skin of any one of claims 1 to 26, wherein the cover skin (7, 8) comprises an elastic paint (32).

28. The cover skin of any one of claims 1 to 27, wherein the cover skin (7, 8) is temperature-resistant in a range from at least -55 °C to at least +120 °C, particularly to at least +180 °C.

## Revendications

1. Peau de couverture pour une surface aérodynamique à forme variable, en particulier pour une structure d'aile, de déflecteur, de surface de commande ou de volet, **caractérisée en ce que** la peau de couverture (7, 8) contient une ossature déformable (28) qui est noyée dans une couche (27) en un matériau élastique, en particulier en un caoutchouc ou polymère.

2. Peau de couverture selon la revendication 1, **caractérisée en ce que** l'ossature (28) est constituée d'éléments (29) qui sont reliés les uns aux autres de manière mobile, en des articulations (30) respectives.

3. Peau de couverture selon la revendication 1 ou 2, **caractérisée en ce que** les éléments (29) de l'ossature (28) sont reliés de manière articulée les uns aux autres, au moyen de la couche élastique (27).

4. Peau de couverture selon la revendication 1 ou 2, **caractérisée en ce que** l'ossature (28) y compris les éléments (29) et les articulations (30) sont fabriqués, du moins par zone, d'un seul tenant en un matériau élastique ou flexible.

5. Peau de couverture selon la revendication 4, **caractérisée en ce que** l'ossature d'un seul tenant (28) est moulée dans une matière plastique ou un métal.

6. Peau de couverture selon la revendication 4, **caractérisée en ce que** l'ossature d'un seul tenant (28) est fabriquée en une matière plastique renforcée de fibres.

7. Peau de couverture selon la revendication 4, **caractérisée en ce que** l'ossature d'un seul tenant (28) est découpée dans une plaque préfabriquée.

8. Peau de couverture selon la revendication 7, **caractérisée en ce que** la plaque préfabriquée dans laquelle l'ossature d'un seul tenant (28) est découpée est en métal, en matière plastique ou en une matière plastique renforcée de fibres.

9. Peau de couverture selon l'une des revendications 4 à 8, **caractérisée en ce que** l'ossature d'un seul tenant (28) contient des zones formant les éléments (29) et des zones formant les articulations (30), les zones formant les éléments (29) présentant une flexibilité ou élasticité inférieure à celle des zones formant les articulations (30).

10. Peau de couverture selon l'une des revendications 4 à 8, **caractérisée en ce que** les éléments (29) de l'ossature (28) sont élastiques en soi.

11. Peau de couverture selon la revendication 9, **caractérisée en ce que** les zones formant les articulations (30) possèdent une section transversale plus petite que celle des zones formant les éléments (29).

12. Peau de couverture selon la revendication 9 ou 11, **caractérisée en ce que** les zones formant les éléments (29) sont réalisées dans une matière plastique renforcée de fibres et que les zones formant les articulations sont réalisées dans une matière plastique sans renfort par fibres ou avec un renfort par fibres plus faible, prévu dans le sens d'une flexibilité ou d'une élasticité plus élevée.

13. Peau de couverture selon l'une des revendications 2 à 12, **caractérisée en ce que** l'ossature (28) est fixée sur un non-tissé support élastique.

14. Peau de couverture selon la revendication 13, **caractérisée en ce que** l'ossature (28) est cousue ou rivetée sur un non-tissé support élastique.

15. Peau de couverture selon l'une des revendications 1 à 14, **caractérisée en ce que** la couche élastique (27) contient un renfort de fibres disposées de manière élastique, en particulier en fibres courtes ou en non-tissé.

16. Peau de couverture selon l'une des revendications 2 à 15, **caractérisée en ce que** les éléments (29) présentent une section transversale s'étendant dans une direction transversale et sont noyés sur chant dans la couche élastique (27).

17. Peau de couverture selon l'une des revendications 1 à 16, **caractérisée en ce que** la peau de couverture est flexible et/ou élastique dans une première direction et est essentiellement rigide dans une seconde direction s'étendant transversalement à la première.

18. Peau de couverture selon l'une des revendications 1 à 17, **caractérisée en ce que** l'ossature (28) contient des cellules élémentaires auxétiques (39) formées par les éléments (29).

19. Peau de couverture selon la revendication 18, **caractérisée en ce que** l'ossature (28) contient des cellules élémentaires auxétiques (39) et des cellules élémentaires classiques (40) formées par les éléments (29) et présente un rapport de contraction transversal donné.

20. Peau de couverture selon la revendication 19, **caractérisée en ce que** le rapport de contraction transversal est essentiellement nul.

21. Peau de couverture selon l'une des revendications 2 à 20, **caractérisée en ce que** des éléments supports (34, 35) servant à la fixation sont prévus sur deux côtés en vis-à-vis l'un de l'autre, par rapport à une direction, dans laquelle la peau de couverture est flexible et/ou élastique.

22. Peau de couverture selon la revendication 21, **caractérisée en ce que** les éléments supports (34, 35) sont noyés dans la couche élastique (27).

23. Peau de couverture selon la revendication 21 ou 22, **caractérisée en ce que** les éléments supports (34, 35) sont en forme de plaques.

24. Peau de couverture selon l'une des revendications 1 à 23, **caractérisée en ce que** la peau de couverture est montée sous contrainte de traction, afin d'éviter un voilement lors de la contraction.

25. Peau de couverture selon l'une des revendications 1 à 24, **caractérisée en ce qu'**au matériau constituant la couche élastique (27) sont ajoutés des matériaux fonctionnels supplémentaires, en particulier du noir de fumée, de la poudre de métal ou des fibres synthétiques conductrices.

26. Peau de couverture selon l'une des revendications 1 à 25, **caractérisée en ce qu'**un tissu métallique ou non-tissé métallique (33) est noyé dans la peau de couverture (7, 8).

27. Peau de couverture selon l'une des revendications 1 à 26, **caractérisée en ce que** la peau de couverture (7, 8) est pourvu d'une peinture élastique (32).

28. Peau de couverture selon l'une des revendications 1 à 27, **caractérisée en ce que** la peau de couverture (7, 8) est résistante aux températures, dans une plage d'au moins - 55°C à au moins +120°C, de préférence à au moins +180°C.
